# EUROPÄISCHE PATENTSCHRIFT

(11) **EP 1 289 790 B1**
(45) Veröffentlichungstag und Bekanntmachung des Hinweises auf die Patenterteilung: **02.01.2004**
(21) Anmeldenummer: 01951359.7
(22) Anmeldetag: 11.06.2001
(51) Int. Cl.: B60K 17/04, B60K 1/00, B60K 17/16

(54) **DIREKT ANGETRIEBENE ANTRIEBSACHSE MIT PLANETEN-DIFFERENTIAL-GETRIEBESTUFE**
DIRECTLY DRIVEN DRIVING AXLE HAVING A PLANETARY DIFFERENTIAL GEARING STEP
ESSIEU MOTEUR ENTRAINE DIRECTEMENT POURVU D'UN ETAGE DE TRANSMISSION PLANETAIRE-DIFFERENTIEL

(30) Priorität: 14.06.2000 DE 20010563 U
(43) Veröffentlichungstag der Anmeldung: 12.03.2003
(73) Patentinhaber: Polakovs-Metzing, Peter, 58708 Menden (DE)
(72) Erfinder: Polakovs-Metzing, Peter, 58708 Menden (DE)
(74) Vertreter: Patentanwälte Meinke, Dabringhaus und Partner
(86) Internationale Anmeldenummer: PCT/DE2001/002151
(87) Internationale Veröffentlichungsnummer: WO 2001/096136

(56) Entgegenhaltungen:
- DE-A- 4 300 445
- DE-A- 19 840 006
- US-A- 5 751 081
- US-A- 6 074 321

## Beschreibung

Die Erfindung betrifft eine Antriebsachse für elektromotorisch angetriebene Fahrzeuge mit einem auf der angetriebenen Motorwelle angeordneten Elektromotor und mit an die Motorwelle unter Zwischenschaltung eines Differentialgetriebes sowie nachgeschalteter Planetengetriebe angeschlossenen Abtriebswellen für das jeweils darauf sitzende Rad, wobei die Zwisehen dem Differentialgetriebe und den Abtriebswellen jeweils angeordneten Planetengetriebe einstufig ausgeführt sind. Derartige Antriebsachsen kommen beispielsweise als direkt angetriebene Vorderachsen bei Gabelstaplern zum Einsatz (DE-43 00 445-A).

Die durch Benutzung bekannt gewordenen Antriebsachsen weisen einen Aufbau mit einem mittig zwischen den anzutreibenden Rädern liegenden, in einem mit dem Fahrzeugchassis verbundenen Gehäuse angeordneten Drehstrommotor auf. An das eine Ende der vom Drehstrommotor angetriebenen Motorwelle ist unmittelbar ein Differentialgetriebe angeschlossen, welches mit zwei davon ausgehenden Antriebswellen gekoppelt ist,
wobei eine der Antriebswellen durch die eine zugeordnete Bohrung aufweisende Motorwelle zu der dem Differentialgetriebe gegenüberliegenden Seite des Drehstrommotors geführt ist. Den beiden Antriebswellen ist im Rahmen eines symmetrischen Aufbaus der Antriebsachse jeweils eine Betriebsbremse beispielsweise in Form einer Federspeicher-Lamellenbremse zugeordnet, der jeweils ein zweistufiges Planetengetriebe mit einem Doppelplanetenrad nachgeschaltet ist, mittels dessen die Drehzahl der Motorwelle bzw. der mit gleicher Drehzahl umlaufenden Antriebswellen für die an das zweistufige Planetengetriebe angeschlossene Abtriebswelle als Träger des jeweiligen Rades untersetzt wird.

Mit der bekannten Antriebswelle ist der wesentliche Nachteil verbunden, daß die beispielsweise mit maximal 3200 U/min sehr hohe Umdrehungszahl der Motorwelle des Drehstrommotors jeweils unmittelbar von dem an die Motorwelle angeschlossenen Differentialgetriebe aufgenommen und umgesetzt werden muß, so daß das Differentialgetriebe einer außerordentlich hohen Belastung ausgesetzt und damit in seiner Funktion störanfällig ist.

Der Erfindung liegt daher die Aufgabe zugrunde, eine Antriebsachse mit den gattungsgemäßen Merkmalen derart auszulegen, daß die Beanspruchung des Differentialgetriebes vermindert ist.

Die Lösung dieser Aufgabe ergibt sich aus dem Patentanspruch, welcher dieser Beschreibung nachgestellt ist.

Im einzelnen sieht die Erfindung vor, daß zwischen die Motorwelle und das Differentialgetriebe ein weiteres drehzahlreduzierendes einstufiges Planetengetriebe eingeschaltet und die Planetenfunktion und die Differentialfunktion in einem in einem gehäusefest angeordneten, innenverzahnten Hohlrad umlaufenden Planetendifferentialkäfig derart vereinigt sind, daß das von dem auf der Motorwelle angeordnete Sonnenritzel angetriebene Planetenrad in dem Planetenfifferentialkäfig gelagert ist und in die Innenverzahnung des den Planetendifferentialkäfig außen umgreifenden Hohlrades eingreift und in dem von dem Planetenrad in Drehung versetzten Planetendifferentialkäfig die Treibräder und Ausgleichsräder angeordnet sind, und daß die zwischen der Planeten-Differential-Getriebestufe und den Abtriebswellen jeweils angeordneten Planetengetriebe einstufig ausgeführt sind.

Mit der Erfindung ist zunächst der Vorteil verbunden, daß durch die zusätzliche, zwischen Motorwelle und Differentialgetriebe angeordnete Getriebestufe, wie sie grundsätzlich aus der US-5 751 081 bekannt ist, die Drehzahl des Drehstommotors erheblich reduziert wird, beispielsweise von maximal 3200 U/min auf weniger als 980 U/min. Damit unterliegt das Differentialgetriebe keiner so hohen Beanspruchung mehr. Daraus ergibt sich weiterhin der Vorteil, daß die der Bremseinheit nachgeschalteten Planetengetriebe zur Einstellung der Drehzahl der die Räder tragenden Abtriebswellen ebenfalls nur noch einstufig ausgeführt zu sein brauchen, womit ebenfalls eine einfache Bauform und Störunanfälligkeit der betreffenden einstufigen Planetengetriebe einhergeht.

Ein besonderer Vorteil der Erfindung liegt weiterhin in der besonderen konstruktiven Ausgestaltung der in einer Baueinheit zusammengefaßten Planeten-Differential-Getriebestufe, die bei den vergleichsweise beengten Einbauverhältnissen derartiger Antriebsachsen trotz der zusätzlichen Getriebestufe ein kompakte Bauweise der Antriebsachse ermöglicht.

In der Zeichnung ist ein Ausführungsbeispiel der Erfindung wiedergegeben, welches nachstehend beschrieben ist. Es zeigen:
- Fig. 1: eine Antriebsachse in einer geschnittenen Seitenansicht,
- Fig. 2: die Planeten-Differential-Getriebestufe in einer ausschnittsweise vergrößerten Darstellung gemäß Figur 1.

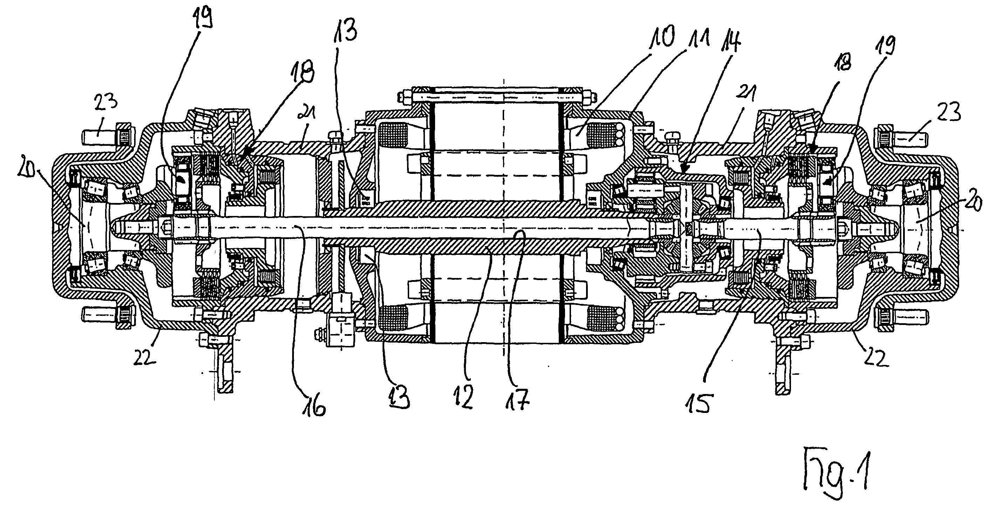

In einem mit dem Chassis des Fahrzeuges verbundenen Gehäuse 11 ist ein Drehstrommotor 10 angeordnet, der direkt auf eine Motorwelle 12 wirkt und diese im Sinne einer Drehbewegung antreibt. Die Motorwelle 12 ist in dem Gehäuse 11 in Lagern 13 gelagert. An dem in Figur 1 rechten Ende der Motorwelle schließt eine mit dem Bezugszeichen 14 bezeichnete und später erläuterte Planeten-Differential-Getriebestufe an, von der eine rechte Antriebswelle 15 und eine für das auf der linken Seite des Gehäuses 11 angeordnete Antriebsrad bestimmte Antriebswelle 16 angetrieben werden. Hierzu ist die linke Antriebswelle 16 durch eine in der Motorwelle 12 vorgesehene Bohrung 17 geführt. Den beiden Antriebswellen 15, 16 ist bei symmetrischem Aufbau der Antriebsachse jeweils eine Federspeicher-Lamellenbremse-Baugruppe 18 zugeordnet, an die ein einstufiges Planetengetriebe 19 anschließt, welches die Drehzahl der jeweiligen Antriebswelle 15, 16 in eine Drehung einer angeschlossenen Abtriebswelle 20 untersetzt, wobei die jeweilige Abtriebswelle 20 Radbolzen 23 zum Ansetzen der Radfelgen aufweist. Die Baugruppen 14, 18 und 19 sind jeweils von Achsrohren 21 bzw. 22 als Gehäuseteilen umschlossen.

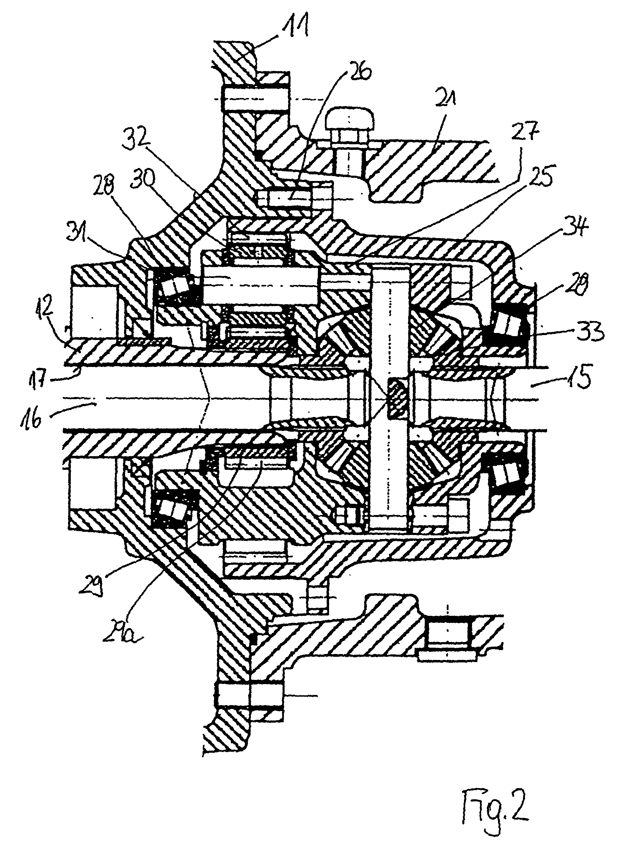

Soweit die Ausbildung der Anordnung von Drehstrommotor 10, Motorwelle 12, Federspeicher-Lamellenbremsen-Baugruppe 18 wie auch des jeweils einstufigen Planetengetriebes 19 mit Abtriebswelle 20 dem Gegenstand der Erfindung nicht berührt und insoweit gegenüber dem Stand der Technik unverändert belassen ist, wird nachfolgend die erfindungsgemäß weitergebildete Baugruppe mit der Planeten-Differential-Getriebestufe 14 beschrieben, wie sich diese aus Figur 2 im einzelnen entnehmen läßt.

An das den Drehstrommotor 10 aufnehmende und fahrzeugfest angeordnete Gehäuse 11 ist ein Hohlrad 25 über Befestigungsmittel 26 angeschlossen, welches an seiner dem Gehäuse 11 zugewandten Stirnseite offen ist und insoweit mit dem Gehäuse 11 einen Einbauraum umschließt. In diesem Einbauraum ist ein Planetendifferentialkäfig 27 drehbar in Lagerstellen 28 gelagert, die einerseits gegen das Gehäuse 11 und andererseits gegen das Hohlrad 25 abgestützt sind. Die Motorwelle 12 ragt bis in den Planetendifferentialkäfig 27 hinein und trägt ein mit einer Außenverzahnung 29a versehenes Sonnenritzel 29, in welches ein außenverzahntes Planetenrad 30 eingreift, welches mittels einer Lagerwelle 31 in dem Planetendifferentialkäfig 27 gelagert ist. Das außenverzahnte Planetenrad 30 steht weiterhin mit der Innenverzahnung 32 des feststehenden Hohlrades 25 in Eingriff.

Axial neben der von dem Planetendifferentialkäfig 27 aufgenommenen Anordnung von Sonnenritzel 29 und Planetenrad 30 sind in dem Planetendifferentialkäfig in an sich bekannter Weise die Treibräder 33 zum Antrieb der beiden in den Planetendifferentialkäfig hineinreichenden Antriebswellen 15 und 16 angeordnet, ferner die für die Funktion des Differentialgetriebes erforderlichen Ausgleichsräder 34.

Wird beim Betrieb der Antriebsachse die Motorwelle 12 vom Drehstrommotor 10 mit hoher Drehzahl angetrieben, so wird die hohe Drehzahl der Motorwelle 12 über das Sonnenritzel 29 und Planetenrad 30 bereits mit einer Untersetzung auf den Planetendifferentialkäfig 27 übertragen, der seinerseits die Treibräder 33 mit einer reduzierten Drehzahl antreibt, so daß die Beanspruchung der Treibräder 33 wie auch der Ausgleichsräder 34 aufgrund der reduzierten Drehzahl erheblich herabgesetzt ist. Mit dieser reduzierten Drehzahl werden über die Differentialgetriebestufe auch die Antriebswellen 15, 16 mit einer gleichen Drehgeschwindigkeit in Drehung versetzt, so daß für den Anschluß der die Räder tragenden Abtriebswellen 20 eine einstufig ausgebildete Planetengetriebestufe 19 ausreicht.

## Patentansprüche

1. Antriebsachse für elektromotorisch angetriebene Flurfahrzeuge, wie Gabelstapler od. dgl., mit einem auf der angetriebenen Motorwelle (12) angeordneten Elektromotor (10) und mit an die Motorwelle (12) unter Zwischenschaltung eines Differentialgetriebes (14) sowie nachgeschalteter Planetengetriebe (19) angeschlossenen Abtriebswellen (20) für das jeweils darauf sitzende Rad, wobei zwischen die Motorwelle (12) und das Differentialgetriebe (14) ein weiteres drehzahlreduzierendes einstufiges Planetengetriebe eingeschaltet und die Planetenfunktion und die Differentialfunktion in einem in einem gehäusefest angeordneten innenverzahnten Hohlrad (25) umlaufenden Planetendifferentialkäfig (27) derart vereinigt sind, daß das von dem auf der Motorwelle (12) angeordneten Sonnenritzel (29) angetriebene Planetenrad (30) in dem Planetendifferentialkäfig (27) gelagert ist und in die Innenverzahnung (32) des den Planetendifferentialkäfig (27) außen umgreifenden Hohlrades (25) eingreift und in dem von dem Planetenrad (30) in Drehung versetzten Planetendifferentialkäfig (27) die Treibräder (33) und Ausgleichsräder (34) angeordnet sind, und daß die zwischen der Planeten-Differential-Getriebestufe (14) und den Abtriebswellen (20) jeweils angeordneten Planetengetriebe (19) einstufig ausgeführt sind.

## Claims

1. Drive axle for electric motor-driven industrial trucks, such as fork lift trucks or the like, having an electric motor (10) disposed on the driven motor shaft (12) and having output shafts (20), which are connected to the motor shaft (12) via a differential gear (14) and rear-mounted planetary gears (19), for the wheel seated in each case thereon, wherein between the motor shaft (12) and the differential gear (14) a further speed-reducing single-step planetary gear is inserted and the planetary function and the differential function are combined in a planetary differential cage (27), which rotates in an internally geared ring gear (25) disposed in a housing-fixed manner, such that the planet wheel (30), which is driven by the sun pinion (29) disposed on the motor shaft (12), is mounted in the planetary differential cage (27) and meshes with the internal gearing (32) of the ring gear (25) externally surrounding the planetary differential cage (27) and the driving gearwheels (33) and differential gearwheels (34) are disposed in the planetary differential cage (27) set in rotation by the planet wheel (30), and that the planetary gears (19) disposed between the planetary differential gear step (14) and each of the output shafts (20) are of a single-step construction.

## Revendications

1. Essieu moteur pour chariots de manutention électromotorisés, tels que chariots élévateurs ou similaires, comprenant un moteur électrique (10) placé sur l'arbre moteur entraîné (12) et des arbres de sortie (20), raccordés à l'arbre moteur (12) avec intercalation d'un engrenage différentiel (14) ainsi que d'engrenages planétaires (19) en aval, pour la roue reposant dessus, un autre engrenage planétaire monoétagé réduisant la vitesse de rotation étant intercalé entre l'arbre moteur (12) et l'engrenage différentiel (14) et la fonction planétaire et la fonction différentielle étant réunies dans une cage d'engrenage différentiel/planétaire (27) tournant dans une roue à denture intérieure (25) fixée sur le carter de telle façon que la roue planétaire (30) entraînée par le pignon solaire (29) placé sur l'arbre moteur (12) soit logée dans la cage de différentiel planétaire (27) et entre en prise dans la denture intérieure (32) de la roue à denture intérieure (25) enveloppant à l'extérieur la cage de différentiel planétaire (27) et les roues motrices (33) et les roues satellites (34) soient placées dans la cage de différentiel planétaire (27) mise en rotation par la roue planétaire (30), et que les engrenages planétaires (19) placés entre l'étage d'engrenage différentiel/planétaire (14) et les arbres de sortie (20) soient monoétagés.
